# EUROPEAN PATENT APPLICATION

(11) **EP 3 181 272 A1**
(43) Date of publication of application: **21.06.2017**
(21) Application number: 14899767.9
(22) Date of filing: 09.09.2014
(51) Int. Cl.: B22F 3/105, B23K 26/144

(54) **SYNCHRONOUS POWDER-FEEDING SPACE LASER MACHINING AND THREE-DIMENSIONAL FORMING METHOD AND DEVICE**

(30) Priority: 11.08.2014 CN 201410391618
(71) Applicant: Zhangjiagang Institute Of Industrial Technologies Soochow University, Suzhou, Jiangsu 215600 (CN)
(72) Inventor: SHI, Shihong, Suzhou Jiangsu 215137 (CN); SHI, Tuo, Suzhou Jiangsu 215137 (CN); FU, Geyan, Suzhou Jiangsu 215137 (CN); ZHU, Gangxian, Suzhou Jiangsu 215137 (CN); SHI, Jianjun, Suzhou Jiangsu 215137 (CN); LEI, Dingzhong, Suzhou Jiangsu 215137 (CN); MENG, Weidong, Suzhou Jiangsu 215137 (CN)
(74) Representative: Lang, Christian
(86) International application number: PCT/CN2014/086118
(87) International publication number: WO 2016/023255

(57) **Abstract**

A synchronous powder-feeding space laser cladding and three-dimensional forming method and device, the method comprising dividing a three-dimensional solid into a plurality of forming units according to a form simplification and nozzle cladding scanning accessibility principle, and dividing each forming unit into a plurality of layers; employing a single-beam gas-carried power-feeding mode in a hollow annular laser; controlling a mechanical arm (7) to drive an in-laser powder-feeding nozzle (1) to move and scan along a predetermined trajectory in a filling area and a boundary area of the layer; and sequentially conducting cladding and stacking formation of the layer for the entire unit. The device comprises an inside-laser powder-feeding nozzle (1), a laser generator (6), a mechanical arm (7), a control module (4), a transmission optical fiber (5), a gas-carried powder feeder (3) and a gas source (2); the control module (4) is connected to the mechanical arm (7), the laser generator (6) and the gas-carried powder feeder (3) respectively; and the in-laser powder-feeding nozzle (1) is fixed at the front end of the mechanical arm (7), and can move in space together with the mechanical arm. The method can conduct cladding machining and three-dimensional stacking formation in space on any surface, and realizes supportless three-dimensional forming of parts with complex structures such as a hanging structure and a cavity.

## Description

### TECHNICAL FIELD

The present invention relates to a laser processing forming technology, particularly to a method and device for synchronous powder-feeding space laser cladding and three-dimensional forming.

### BACKGROUND TECHNOLOGY

The additive manufacturing technology is a technology that manufactures a solid part by gradually adding materials. There are two common laser additive manufacturing methods for metal, laser powder-bed selective sintering melting and laser synchronous material-feeding cladding forming. The selective sintering method, using a powder bed as a support, can form a metal part having complex shape and an overhang, but suffers from expensive equipment, a high cost, and limited forming size. Cladding forming metal by the laser synchronous material-feeding method can approach or achieve performance of forgings at a low cost, and can be integrated with various CNC machine tools, mobile robots and so on to freely form a large three-dimensional solid; it can clad the surface of an important part with a high-performance alloy layer, doubling the life or giving the part special function; it can repair and remanufacture the damaged portion of a part to get the part back to life; it can flexibly complete urgent repair, urgent rescue and other operations on equipment at a fixed location, the project site or the war frontline. The laser synchronous material-feeding cladding processing forming has become an advanced and even indispensable processing forming means in many areas.

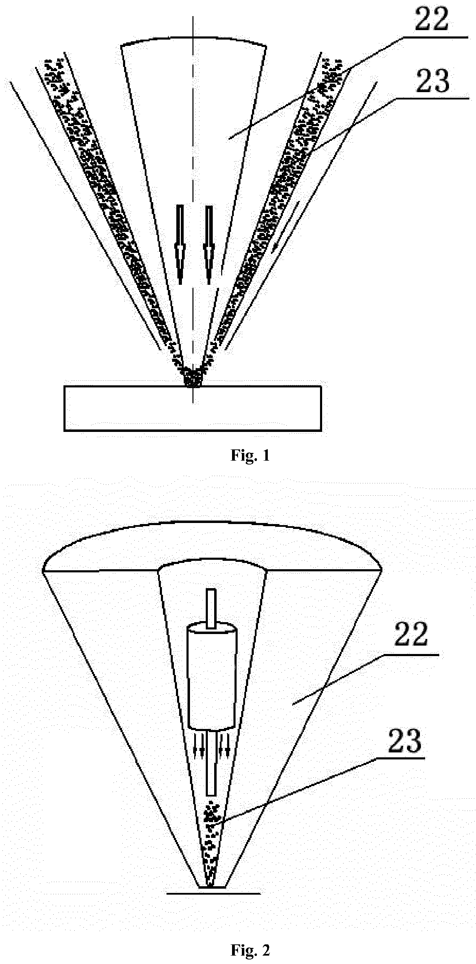

In the prior art, the synchronous powder-feeding laser three-dimensional forming has the following steps: First slicing the computer three-dimensional model to be formed into a solid with a series of horizontal planes to get a two-dimensional sectional model of a number of layers; then a laser beam and metal powder sent out of a laser-powder coupling nozzle are focused and converged on the forming surface simultaneously, with the focused laser spot irradiated onto the powder spot to make it quickly molten together with the superficial layer of the base surface to form a molten pool; with the laser-powder coupling nozzle scanning along a predetermined path, the molten pool rapidly solidifies into a solid molten channel; thus, by scanning and forming according to the shape of each layer, the laser-powder coupling nozzle rises vertically by a height of one layer each time one layer of solid is formed, and then a next layer starts to be scanned and formed; and finally the layers are stacked and accumulated to produce a three-dimensional solid. The essence of this method is dimensionality reduction; that is, a three-dimensional solid is sliced into multiple horizontal parallel two-dimensional layers, and then all the horizontal layers are stacked vertically in turn to accumulate into a three-dimensional solid, which is called the "vertical growth method". A basic requirement of the three-dimensional forming is that, when the laser-powder coupling nozzle is scanning along any direction within a two-dimensional layer, the laser and the powder are coaxial to keep their coupling pose unchanged, so as to get an isotropic molten channel; therefore, in order to keep the scanning isotropy, a coaxial powder-feeding method is generally used for stacking accumulating layers for three-dimensional forming. There are two coaxial powder-feeding methods: A coaxial powder-feeding nozzle as disclosed in a U.S. patent (US5418350; US5477026; US5961862), a European patent (WO2005028151), a Japanese patent (JP2005219060) and other patents has the following basic structure: an annular or multi-channel powder-feeding tube is arranged slantwise around a solid focused laser beam 22, and converges the outputted powder beam 23 in the focused laser spot formed by the laser beam on the forming base surface, which can be called the "outside-laser powder-feeding method", as shown in Fig. 1. The outside-laser powder-feeding method, converging multi-channel powder beam, has divergent powder, a coarse powder spot, only one point of convergence, and a narrow range in which the laser beam can be coupled, making coupling not easy to be done. Another method is an inside-laser powder-feeding nozzle disclosed in the patent CN2006101164131 and other patents, which converts the laser beam 22 into a hollow annular focused laser beam, and then sends a single powder beam 23 coaxially within the annular laser beam perpendicularly to the inside of the focused laser spot on the forming surface, as shown in Fig. 2. The inside-laser powder-feeding method uses a single powder beam, with the powder beam long and thin and the powder spot small; since the laser and the powder are really coaxial, the laser-powder coupling range is wide, making coupling easy to be done. In particular, when a protective gas tube is sleeved outside the powder-feeding spray tube, an annular gas curtain is formed at the periphery of the powder beam, and can play a further role in clustering and collimating the powder beam.

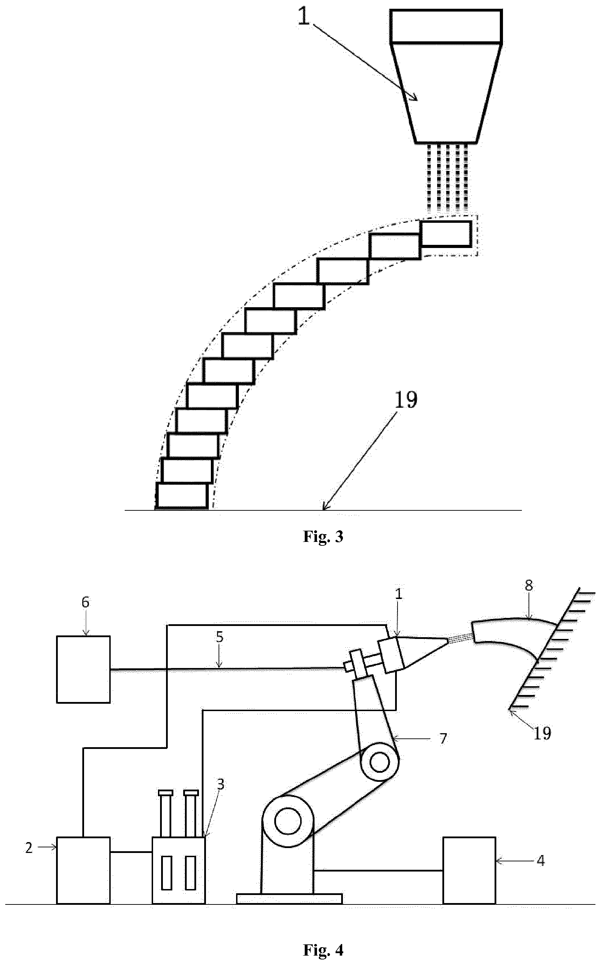

It can be seen from the existing synchronous powder-feeding three-dimensional forming method that, this method allows no-support free forming, and can only use the cladded molten channel in the lower layer as the support for the upper layer in the horizontal layered accumulation; when forming an overhang or a cavity structural part, the upper layer will be displaced partially relative to the lower layer to result in the "step effect" on the surface; when there is excessive or complete dislocation, light-powder leakage and molten pool flow will be caused, and even forming cannot be carried out, as shown in Fig. 3. Under the action of a tension of the molten pool, the small dislocation between the upper and lower layers can still allow a small-angle inclined wall structure to be formed, but cannot allow a big-angle inclined part, an overhang or a cavity and other similar structural parts to be formed. Therefore, currently the synchronous powder-feeding laser three-dimensional forming can be generally only used for the cladding reinforcement and repair in the horizontal plane and the horizontally layered three-dimensional forming, but still cannot be used for the cladding reinforcement and repair on a facade, an incline, a bottom surface or any other surface in the space and the space-layered three-dimensional forming. A literature (Luo Tao, Yang Xichen, Liu Yunwu, et al., Three-dimensional laser coaxial powder-feeding system and industrial application thereof, Manufacturing Technology and Equipment, 2005(2): 121-123) discloses a coaxial powder-feeding system with six degrees of freedom, allowing a nozzle to oscillate within a certain inclination; a literature (Wu X, Mei J., Near net shape manufacture of components using direct laser fabrication technology, Journal of Materials Processing Technology, 2003, 135(2-3): 266-270) uses the laser synchronous powder-feeding process to manufacture a characteristic structure having an inclination smaller than 30°, but still cannot manufacture a structure having a big inclination. A U.S. patent US2012/0100313A1 reports an upright cylindrical surface laser cladding method, by which the powder beam is sprayed slantwise upward from a side of the laser beam, the molten pool is supported by an upward component force of the powder and gas stream, and then the cylinder is rotated and the nozzle moves relative to the busline to get the facade cladded. This method of feeding powder from a side of the laser, not coaxially feeding the powder, is only applicable to cladding in a fixed direction, but cannot meet the requirements of facade forming for isotropy, not to mention the three-dimensional forming on any surface in the space.

Currently the synchronous powder-feeding laser three-dimensional cladding and forming method has the following shortcomings: (1) In the layered three-dimensional forming of an overhanging structural part, forming dislocation is caused at the upper and lower layers at the overhanging boundary because of no support, which will reduce the forming accuracy on the less serious occasion to result in the "step effect" on the surface, and will cause laser-powder leakage and molten pool flow on the serious occasion to make accumulating forming not sustainable; (2) it can only form an upright structure or a less outward inclined structure and other simple structures, but cannot form a greatly outward inclined structure, a cantilever or a cavity and other complex structures; and (3) it can only allow cladding process, repair or forming of a horizontal plane or a small-angle incline, but cannot allow cladding process, repair or three-dimensional accumulating forming on any inclines in the space. Therefore, a new method and device for synchronous powder-feeding space laser cladding and three-dimensional forming is needed, which can carry out cladding process and stereoscopic accumulating forming on any inclines in the space, and can form a greatly outward inclined structure, a cantilever, a cavity and other complex parts by three-dimensional forming that allows changing direction and pose in the space continuously.

### SUMMARY OF THE INVENTION

A purpose of the present invention is to provide a method and device for synchronous powder-feeding laser three-dimensional forming, which can carry out cladding process and stereoscopic accumulating forming on any surface in the space, and can carry out no-support three-dimensional forming of an overhang, a cavity and other complex parts.

In order to achieve the above purpose, the present invention adopts the following technical solution: A method for synchronous powder-feeding space laser cladding and three-dimensional forming is provided, comprising the following steps:
(1) Dividing a multi-branch complex three-dimensional solid expected to be formed into at least one forming unit based on the principle of body simplification and nozzle cladding scanning accessibility, and selecting the forming sequence of each unit in turn, with each forming unit having a respective optimal forming growth direction and rule;
(2) dividing the forming unit obtained in the step (1) into a number of layers in the stacking accumulating direction, each layer including at least one of a filling region and a boundary region;
(3) using the hollow annular laser inside-laser single-beam gas-carried powder-feeding method to control a mechanical arm to drive an inside-laser powder-feeding nozzle to scan and move in the boundary region and the filling region of a layer along a predetermined track, so as to complete cladding, accumulating and forming of this layer, respectively; in scanning forming, the laser-powder spray axis of the inside-laser powder-feeding nozzle is always along the normal direction of the layer; when the filling region and the boundary region are inconsistent in the layering direction, i.e., the layers are not parallel to each other, the nozzle needs to be deflected to complete cladding forming of different regions, respectively;
(4) after cladding forming of a layer, the nozzle retreats by a distance of thickness of one layer along the growth direction of a next layer, and completes scanning cladding forming of a new layer according to the step (3); repeating in this way, until the stacking accumulation of the entire forming unit is completed; wherein the nozzle needs to continuously change its position for each layer in forming the boundary of a curved surface, with the stacking forming always done along the bending direction of the boundary; and
(5) after completing a forming unit, controlling the mechanical arm to move the inside-laser powder-feeding nozzle to the start position of a next forming unit, so as to repeat the steps (2), (3) and (4) for stacking accumulating forming of a new forming unit; repeating in this way, until completing all the unit accumulation of the entire three-dimensional solid.

In the step (2) of the above technical solution, all the layers in the filling region, parallel to each other, are parallel to the base surface; when the boundary region is layered, it is sliced along the vertical direction of the boundary face; when the boundary face is straight faced, the layers are parallel to each other and equal in thickness; when the boundary face is a curved surface, the layers are neither parallel to each other nor equal in thickness.

A device for synchronous powder-feeding space laser cladding and three-dimensional forming is provided, comprising an inside-laser powder-feeding nozzle, a laser generator, a mechanical arm, a control module, a transmission fiber, a gas-carried powder feeder and a gas source; the control module is connected with the mechanical arm, the laser generator, and the gas-carried powder feeder, respectively, the inside-laser powder-feeding nozzle is fixed at the front end of the mechanical arm, and the laser output of the laser generator is connected via the transmission fiber to the upper end of the inside-laser powder-feeding nozzle; a gas-supplying branch of the gas source is in communication with the gas-carried powder feeder, which is in communication with a powder spray tube in the inside-laser powder-feeding nozzle, with a collimating gas tube sleeved outside the powder spray tube; another gas-supplying branch of the gas source is in communication via a tube with the collimating gas tube in the inside-laser powder-feeding nozzle.

In the above technical solution, the pressure of the gas-carried powder sprayed out of the powder spray tube can be adjusted to 0-0.2 Mpa.

In the above technical solution, the pressure of the annular collimating gas sprayed out of the collimating gas tube can be adjusted to 0.05-0.3 Mpa.

In the above technical solution, the ratio of the diameters of the powder spray tube and the collimating gas tube is 1:2-1:6.

In the above technical solution, the outlet of the powder spray tube extends beyond the outlet of the collimating gas tube by a length of 0-20 mm.

In the above technical solution, the gas outputted from the gas source is an inert gas.

With the above technical solution, the present invention has the following advantages compared with the prior art:
1. The present invention uses the hollow laser inside-laser single-beam powder-feeding method, with the track of the powder beam simple and easy to be controlled; with the gas-carried powder-feeding method, when the axis of the inside-laser powder-feeding nozzle is located in any angular position in the space, adjusting the pressure of the gas-carried powder and the pressure of the annular collimating gas in a matching way to balance the influence of gravity, so as to make the single powder beam thin, erect, collimating, and straight within a certain range, such that the laser and powder can be coupled accurately on the forming surface to allow the powder to be fed to the molten pool accurately. The present invention, under the condition that the axis of the inside-laser powder-feeding nozzle is located at any angle in the space, makes the laser beam, the gas-carried powder beam and the annular collimating gas completely coaxial, and uses the appropriate structure and size of a powder gas tube, the appropriate carried powder and annular collimating gas pressure, and the appropriate cladding process parameters; in spatial forming, both the gas-carried powder and the annular collimating gas have a forward pressure that presses the molten pool onto the forming surface, guaranteeing that the molten pool will not flow while solidifying, such that a stable molten channel can be formed on any angular base surface in the space.
2. The present invention uses a space zoning planned forming unit for the laser three-dimensional forming part, wherein each unit can be subject to different layering method and planning, the layers can be parallel or nonparallel to each other and can be equal or unequal in thickness, and the boundary layer and the filling layer of each layer can have different accumulating forming direction. Therefore, the present invention can not only complete cladding reinforcement or repair of any inclined surface in the space, but also break the limit of the traditional synchronous material-feeding laser three-dimensional forming process that a simple solid can be formed only by slicing with a horizontal plane and forming from bottom to top, allowing cladding forming and layered accumulation along different inclination direction in the space, allowing three-dimensional forming of parts containing a cantilever, a cavity and other complex structures by processing forming and continuously changing direction on any inclined base surface.
3. The present invention, for a three-dimensional solid with a slantwise overhanging surface, uses a boundary zone method for layering the boundary, i.e. always slicing perpendicularly to the overhanging slantwise boundary; in stacking accumulating forming, the laser-powder spray axis is always placed in the tangential direction of the outer surface of the forming unit, with the upper and lower layers basically all covered without dislocation, which can remove the "step effect", improve the forming accuracy and reduce the surface roughness; in layering, the thickness of the layer can also be appropriately increased, so as to improve the forming efficiency while achieving a smoothly formed surface.

### BRIEF DESCRIPTION OF THE DRAWINGS

Fig. 1 is a schematic diagram of an existing outside-laser powder-feeding nozzle in the background of the invention.
Fig. 2 is a schematic diagram of an existing inside-laser powder-feeding nozzle in the background of the invention.
Fig. 3 is a schematic diagram of the horizontal layered dislocation of the existing curved boundary in the background of the invention.
Fig. 4 is a schematic diagram of the connection of the device for synchronous powder-feeding space laser cladding and three-dimensional forming of the present invention in Example 1.
Fig. 5 is a diagram of the relation between the powder spray tube and the collimating gas tube of the present invention in Example 1.
Fig. 6 is a schematic diagram of the method for forming unit by unit a multi-branch structural part of the present invention in Example 2.
Fig. 7 is a schematic diagram of the unit zoning forming method of the present invention in Example 3.
Fig. 8 is a schematic diagram of the normal layering forming method of the curved boundary of the present invention in Example 3.
Fig. 9 is a schematic diagram of the solid forming method of the multiple boundary regions of the present invention in Example 4.
Fig. 10 is a schematic diagram of the solid forming method of the boundary face with the same degree of curvature of the present invention in Example 5.
Fig. 11 is a schematic diagram of the method for forming a thin-walled rotating part of the present invention in Example 6.
Fig. 12 is a schematic diagram of the method for repairing defects on the base surface with any inclination of the present invention in Example 7.

List of reference signs: 1. An inside-laser powder-feeding nozzle; 2. a gas source; 3. a gas-carried powder feeder; 4. a control module; 5. a transmission fiber; 6. a laser generator; 7. a mechanical arm; 8. a forming part; 9. a powder spray tube; 10. a collimating gas tube; 11. a forming unit a; 12. a forming unit b; 13. a forming unit c; 14. gas-carried powder; 15. annular collimating gas; 16. a filling region; 17. a boundary face; 18. a boundary region; 19. a base surface; 20. a rotary table; 21. a surface to be repaired; 22. a laser beam; and 23. a powder beam.

### DETAILED DESCRIPTION OF THE INVENTION

The present invention will be further described below with reference to drawings and examples.

Example 1: A method for synchronous powder-feeding space laser cladding and three-dimensional forming is provided, comprising the following steps:
(1) Dividing a multi-branch complex three-dimensional solid expected to be formed into one or more forming units based on the body simplification and nozzle cladding scanning accessibility principle, and selecting the forming sequence of each unit in turn, with each forming unit having a respective optimal forming growth direction and rule;
(2) dividing the forming unit obtained in the step (1) into a number of layers along the stacking accumulating direction, each layer at least including one of the filling region and the boundary region;
(3) using a hollow annular laser inside-laser single-beam gas-carried powder-feeding method to control a mechanical arm to drive an inside-laser powder-feeding nozzle to scan and move in the boundary region and the filling region of a layer along a predetermined track, so as to complete cladding accumulating forming of this layer, respectively; in scanning forming, the laser-powder spray axis of the inside-laser powder-feeding nozzle is always along the normal direction of the layer; when the filling region and the boundary region are inconsistent in the slicing direction, i.e., the layers are not parallel to each other, the nozzle may need to be deflected to complete cladding forming of the different regions, respectively;
(4) after cladding forming of a layer, the nozzle can retreat by a distance of thickness of one layer along the growth direction of a next layer, and completes scanning cladding forming of a new layer according to the step (3); the nozzle needs to get its position continuously changed in forming the boundary region of each layer, stacking forming always along the bending direction of the boundary, with the upper and lower layers all covered without dislocation, avoiding the laser-powder leakage caused by a stacking fault, removing the "step effect"; repeating in this way, until the stacking accumulation of the entire forming unit is completed; and
(5) after completing a forming unit, controlling the mechanical arm to move the inside-laser powder-feeding nozzle to the start position of a next forming unit, so as to repeat the steps (2), (3) and (4) for stacking accumulating forming of a new forming unit; repeating in this way, until completing all the unit accumulation of the entire three-dimensional solid.

In this example, the layering principle of the boundary region is as follows: Slicing along the vertical direction, i.e. the normal direction of the boundary face. When the boundary face is straight faced, the layers are parallel to each other and equal in thickness; when the boundary face is a curved surface, the layers can be neither parallel to each other nor equal in thickness. The layering principle of the filling region is as follows: The layers are all parallel to the base surface and also parallel to each other.

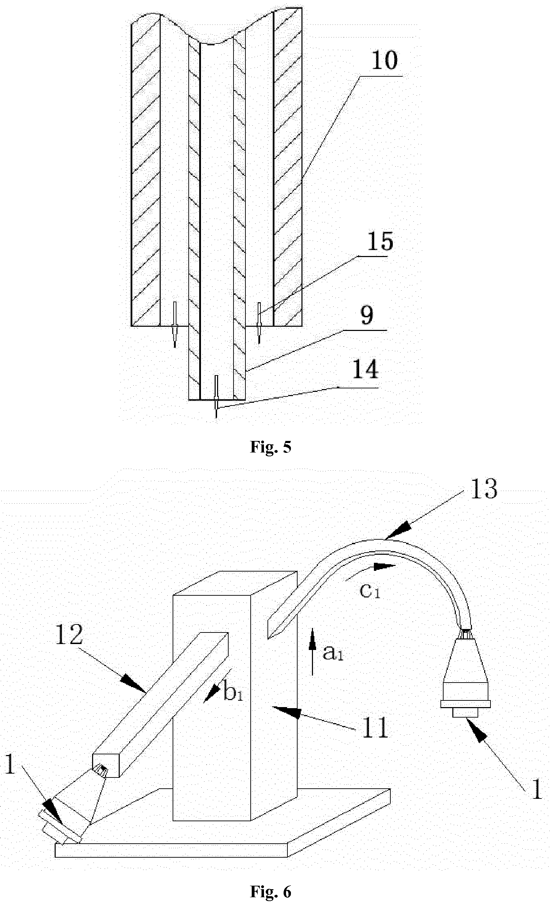

As shown in Figs. 4 and 5, a device for synchronous powder-feeding space laser cladding and three-dimensional forming is provided, comprising an inside-laser powder-feeding nozzle 1, a laser generator 6, a mechanical arm 7, a control module 4, a transmission fiber 5, a gas-carried powder feeder 3 and a gas source 2; the control module 4 is connected with the mechanical arm 7, the laser generator 6 and the gas-carried powder feeder 3, respectively, and controls movement of the mechanical arm 7; the inside-laser powder-feeding nozzle 1 is fixed at the front end of the mechanical arm 7, and can move in the space with the mechanical arm 7, so as to form on any angular base surface in the space and continuously change position and pose for cladding forming according to the path plan given by the control module 4, thus producing a forming part 8. The laser output of the laser generator 6 is connected via the transmission fiber 5 to the upper end of the inside-laser powder-feeding nozzle 1; a gas-supplying branch of the gas source 2 is in communication with the gas-carried powder feeder 3, which is in communication with a powder spray tube 9 in the inside-laser powder-feeding nozzle 1, so as to transport the gas-carried powder 14; with a collimating gas tube 10 sleeved outside the powder spray tube 9, another gas-supplying branch of the gas source 2 is in communication via a tube with the collimating gas tube 10 for transporting the annular collimating gas 15.

In this example, the pressure of the gas-carried powder 14 sprayed out of the powder spray tube 9 can be adjusted to 0-0.2 Mpa, the pressure of the annular collimating gas 15 sprayed out of the collimating gas tube 10 can be adjusted to 0.05-0.3 Mpa, the ratio of the diameters of the powder spray tube 9 and the collimating gas tube 10 is 1:2-1:6, the outlet of the powder spray tube 9 extends beyond the outlet of the collimating gas tube 10 by a length of 0-20 mm, and the gas outputted from the gas source 2 is an inert gas.

Example 2: As shown in Fig. 6, dividing the three-branch three-dimensional forming into three simple-shaped forming units a, b and c according to the body simplification and inside-laser powder-feeding nozzle accessibility principle; wherein the forming unit a11 has a forming growth direction a1, the forming unit b12 has a forming growth direction b1, and the forming unit c13 has a forming growth direction c1. The forming sequence is as follows: First forming the forming unit all, then controlling the mechanical arm 7 to move the inside-laser powder-feeding nozzle 1 to the start position of the forming unit b12 to form the forming unit b12 on the sidewall of the forming unit all, and then controlling the mechanical arm 7 to move the inside-laser powder-feeding nozzle to the start position of the forming unit c13 to form the forming unit c13 on the other side of the forming unit all, and so on, until completing the unit accumulation of the entire three-branch three-dimensional solid.

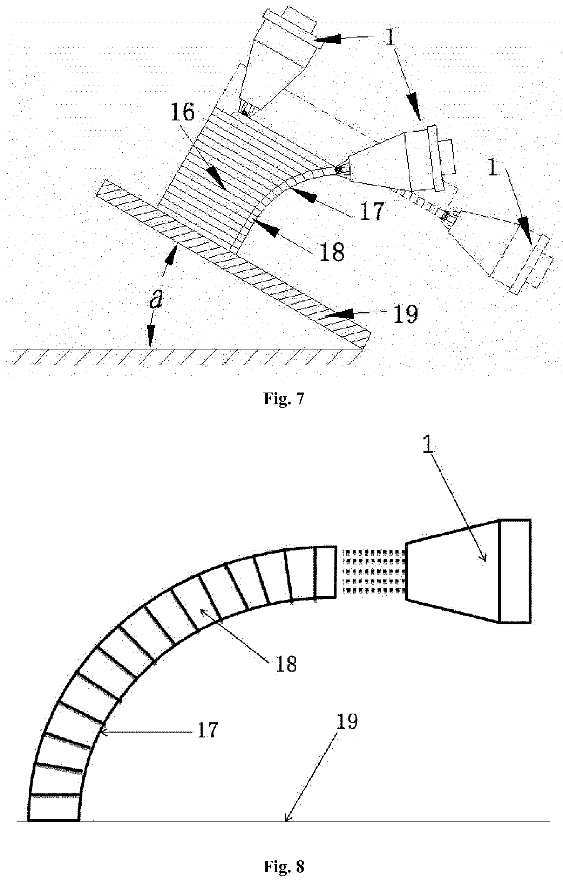

Example 3: The synchronous powder-feeding space laser cladding and three-dimensional forming of the curved overhanging structural part is shown in Figs. 7 and 8, which uses a zoning method, dividing the forming unit along the optimal growth accumulation direction into a number of layers, with each layer divided into a boundary region 18 and a filling region 16. The layering principle of the boundary region 18 is as follows: Always slicing along a direction perpendicular to the boundary face 17, i.e. along the normal direction of the boundary face; when the boundary face is straight faced, the layers are parallel to each other; when the boundary face is a curved surface, the layers can be neither parallel to each other nor equal in thickness. The layering principle of the filling region 16 is as follows: All the layers are parallel to the base surface 19 and also parallel to each other. After cladding forming a layer, the nozzle retreats by a distance of thickness of one layer along the growth direction of the layers, so as to complete scanning cladding forming of a new layer. Repeating in this way, until the stacking accumulation of the entire forming unit is completed. For the curved boundary region 18, the position of the nozzle needs to be continuously changed for forming each layer, and stacking forming is carried out always along the normal direction of the boundary. The zoning forming method can make the upper and lower layers entirely covered without dislocation, avoid the laser-powder leakage caused by a stacking fault, and remove the "step effect".

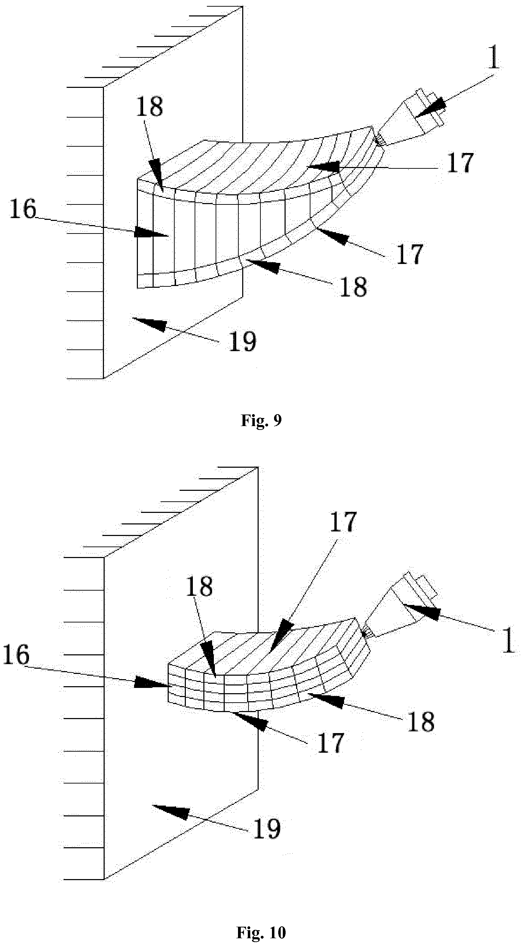

Example 4: In Example 3 as shown in Fig. 9, the forming unit can include one or more boundary faces 17, i.e. including one or more boundary regions 18.

Example 5: As shown in Fig. 10, when multiple boundary faces 17 of the forming unit are parallel to each other or have the same degree of curvature, the filling region 16 can be consistent with the boundary region 18 in the layering direction, that is, both the filling region 16 and the boundary region 18 are based on the layering principle of always layering along a direction perpendicular to the boundary face 17, i.e. along the normal direction of the boundary face.

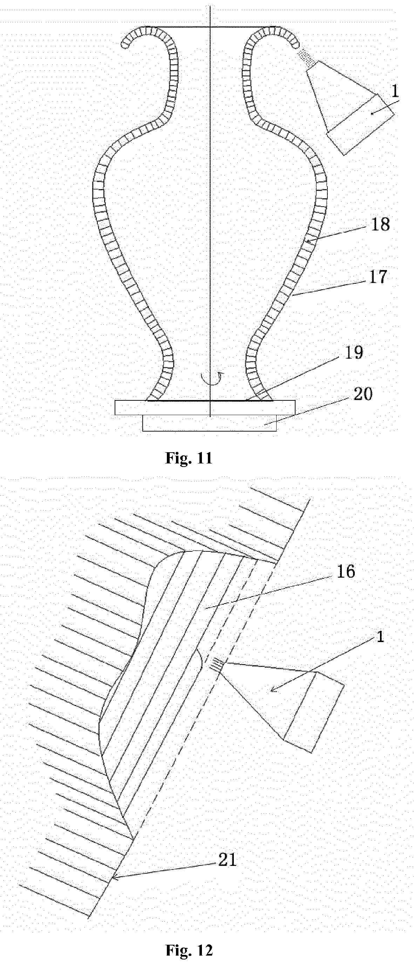

Example 6: As shown in Fig. 11, for the synchronous powder-feeding space laser cladding and three-dimensional forming of the thin-walled rotating part, the part is only divided into the boundary region 18 according to characteristics of the thin-walled structure, layered along the vertical direction of the curved boundary face 17. Controlling the mechanical arm 7 to retain the inside-laser powder-feeding nozzle 1 to the normal direction of the boundary face for cladding forming, meanwhile driving the base surface 19 to rotate by the rotary table 20 by accumulating one layer per revolution, and then controlling the mechanical arm 7 along the predetermined track to retain the inside-laser powder-feeding nozzle 1 to retreat by a distance of thickness of one layer for accumulating a next layer, until the stacking accumulation of the entire thin-walled rotating part is completed.

Example 7: As shown in Fig. 12, for the space laser cladding and three-dimensional forming repair method for the damaged parts on the base surface with any inclination, layering the filling region 16 by taking the damaged part of the surface 21 to be repaired as the filling region 16, with all the layers parallel to the surface 60 to be repaired. Controlling the mechanical arm 7 to retain the inside-laser powder-feeding nozzle 1 to complete cladding forming of a layer, and then controlling the mechanical arm 7 along the predetermined track to retain the inside-laser powder-feeding nozzle 1 to retreat by a distance of thickness of one layer for accumulating a next layer, until completing stacking filling accumulating repairing forming of the entire damaged part.

## Claims

1. A method for synchronous powder-feeding space laser cladding and three-dimensional forming, comprising the following steps:
(1) dividing a multi-branch complex three-dimensional solid expected to be formed into at least one forming unit based on the principle of body simplification and nozzle cladding scanning accessibility, and selecting the forming sequence of each unit in turn, with each forming unit having a respective optimal forming growth direction and rule;
(2) dividing the forming unit obtained in the step (1) into a number of layers in the stacking accumulating direction, each layer including at least one of a filling region and a boundary region;
(3) using the hollow annular laser inside-laser single-beam gas-carried powder-feeding method to control a mechanical arm to drive an inside-laser powder-feeding nozzle to scan and move in the boundary region and the filling region of a layer along a predetermined track, so as to complete cladding, accumulating and forming of this layer, respectively; in scanning forming, the laser-powder spray axis of the inside-laser powder-feeding nozzle is always along the normal direction of the layer; when the filling region and the boundary region are inconsistent in the layering direction, i.e., the layers are not parallel to each other, the nozzle needs to be deflected to complete cladding forming of different regions, respectively;
(4) after cladding forming of a layer, the nozzle retreats by a distance of thickness of one layer along the growth direction of a next layer, and completes scanning cladding forming of a new layer according to the step (3); repeating in this way, until the stacking accumulation of the entire forming unit is completed; wherein the nozzle needs to continuously change its position for each layer in forming the boundary of a curved surface, with the stacking forming always done along the bending direction of the boundary; and
(5) after completing a forming unit, controlling the mechanical arm to move the inside-laser powder-feeding nozzle to the start position of a next forming unit, so as to repeat the steps (2), (3) and (4) for stacking accumulating forming of a new forming unit; repeating in this way, until completing all the unit accumulation of the entire three-dimensional solid.

2. The method for synchronous powder-feeding space laser cladding and three-dimensional forming according to claim 1, wherein in step (2), all the layers in the filling region, parallel to each other, are parallel to the base surface; when the boundary region is layered, it is sliced along the vertical direction of the boundary face; when the boundary face is straight faced, the layers are parallel to each other and equal in thickness; when the boundary face is a curved surface, the layers are neither parallel to each other nor equal in thickness.

3. A device for synchronous powder-feeding space laser cladding and three-dimensional forming, which **characterized in**, comprising an inside-laser powder-feeding nozzle, a laser generator, a mechanical arm, a control module, a transmission fiber, a gas-carried powder feeder and a gas source; the control module is connected with the mechanical arm, the laser generator, and the gas-carried powder feeder, respectively, the inside-laser powder-feeding nozzle is fixed at the front end of the mechanical arm, and the laser output of the laser generator is connected via the transmission fiber to the upper end of the inside-laser powder-feeding nozzle; a gas-supplying branch of the gas source is in communication with the gas-carried powder feeder, which is in communication with a powder spray tube in the inside-laser powder-feeding nozzle, with a collimating gas tube sleeved outside the powder spray tube; another gas-supplying branch of the gas source is in communication via a tube with the collimating gas tube in the inside-laser powder-feeding nozzle.

4. The device for synchronous powder-feeding space laser cladding and three-dimensional forming according to claim 3, wherein the pressure of the gas-carried powder sprayed out of the powder spray tube is between 0 to 0.2 Mpa.

5. The device for synchronous powder-feeding space laser cladding and three-dimensional forming according to claim 3, wherein the pressure of the annular collimating gas sprayed out of the collimating gas tube is between 0.05 to 0.3 Mpa.

6. The device for synchronous powder-feeding space laser cladding and three-dimensional forming according to claim 3, wherein the ratio of the diameters of the powder spray tube and the collimating gas tube is 1:2 to 1:6.

7. The device for synchronous powder-feeding space laser cladding and three-dimensional forming according to claim 3, wherein the outlet of the powder spray tube extends beyond the outlet of the collimating gas tube by a length of 0 to 20 mm.

8. The device for synchronous powder-feeding space laser cladding and three-dimensional forming according to claim 3, wherein the gas outputted from the gas source is an inert gas.
